(19) Europäisches Patentamt
European Patent Office
Office européen des brevets

(11) Veröffentlichungsnummer: **0 078 766**
**B1**

(12) # EUROPÄISCHE PATENTSCHRIFT

(45) Veröffentlichungstag der Patentschrift: **17.04.85**

(51) Int. Cl.⁴: **C 07 F 9/38**, C 07 F 9/40

(21) Anmeldenummer: **82810450.5**

(22) Anmeldetag: **27.10.82**

(54) **Verfahren zur Herstellung von Aminomethylphosphonsäure.**

(30) Priorität: **02.11.81 US 317048**

(43) Veröffentlichungstag der Anmeldung: **11.05.83 Patentblatt 83/19**

(45) Bekanntmachung des Hinweises auf die Patenterteilung: **17.04.85 Patentblatt 85/16**

(84) Benannte Vertragsstaaten: **AT BE CH DE FR GB IT LI LU NL SE**

(56) Entgegenhaltungen:
**DE - A - 2 829 046**

**SYNTHESIS, Nr. 11, November 1980, Seite 906, Speyer/Rhein, DE. J. OLEKSYSZYN et al.: "Aminomethanephosphonic acid and its diphenyl ester"**

(73) Patentinhaber: **CIBA-GEIGY AG, Postfach, CH-4002 Basel (CH)**

(72) Erfinder: **Maier, Ludwig, Dr., Im Lee 28, CH-4144 Arlesheim (CH)**

**EP 0 078 766 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von Aminomethylphosphonsäure der Formel

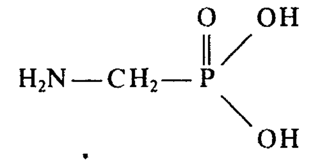

(I)

Aminomethylphosphonsäure ist bisher sowohl als Wirkstoff zur Beeinflussung des Pflanzenwaschtums (vgl. DE-A1-2 315 886) als auch als Zwischenprodukt für die Herstellung von herbiziden Wirkstoffen (vgl. DE-A1-2 555 573) beschrieben worden.

Es wurde bereits vorgeschlagen, Aminomethylphosphonsäure durch Umsetzung eines Carbonsäure-N-hydroxymethylamids mit Phosphortrichlorid bzw. mit einem Trialkylphosphit und nachfolgende Hydrolyse des erhaltenen Reaktionsprodukts herzustellen (vgl. US-A-2 304 156 und 2 328 358 und Bull. Akad. Sci. (UdSSR), 1968, 585).

Ein weiteres bekanntes Verfahren beruht auf der Umsetzung von N-Brommethylphthalimid mit Natriumdiäthylphosphit oder Triäthylphosphit und anschließende Hydrolyse des so erhaltenen Phthalimidomethylphosphonsäurediäthylesters (vgl. Bull. Soc. Chim. (France), 778 (1948); Ann. Chim. (Paris) [12] 4, 372 (1954); J. Amer. Chem. Soc. 75, 5278 (1953); J. Chem. Soc. (c), 1349 (1966)).

Ferner ist bekannt, Aminomethylphosphonsäure durch Umsetzung von O,O-Diäthyl-halogenmethylphosphonaten mit Ammoniak und nachfolgende Hydrolyse des erhaltenen Reaktionsproduktes (vgl. CA 45,8444 (1951); ibid. 46, 421 (1952); ibid. 48, 564 (1954)) oder durch Umsetzung von Chlormethylphosphonsäure mit Ammoniak (vgl. DE-A1-2 315 886) herzustellen.

Es wurde auch bereits vorgeschlagen, Aminomethylphosphonsäure durch Curtius'schen Abbau von O,O-Diäthylphosphonoacetylhydrazid herzustellen (vgl. J. Org. Chem. 29, 832 (1964)).

Weiterhin ist bekannt, Aminomethylphosphonsäure in der Weise herzustellen, daß man tert. Butylamin zunächst mit Formaldehyd zur entsprechenden Schiffschen Base (N-Methylen-tert. butylamin) umsetzt, diese durch Anlagerung eines Phosphorigsäurediesters in ein N-tert.-Butylaminomethylphosphonat überführt und aus diesem unter gleichzeitiger Hydrolyse der Estergruppen durch Einwirkung von Bromwasserstoff unter energischen Bedingungen die tert. Butylgruppe abspaltet (vgl. Synth Inorg. Metal Org. Chem. 2, 317 (1972)).

Ein anderes bekanntes Verfahren zur Herstellung von Aminomethylphosphonsäure beruht auf der Umsetzung von Dibenzylamin mit Formaldehyd und einem Phosphorigsäureester zu einem N,N-Dibenzylaminomethylphosphonat, dessen Hydrolyse und anschließende hydrogenolytische Abspaltung der N-Benzylgruppen. Eine Alternative zu diesem Verfahren besteht darin, daß man die bei dieser Synthese durchlaufene N,N-Dibenzylaminomethylphosphonsäure durch Umsetzung von Dibenzylamin mit Chloressigsäure zu N,N-Dibenzylglycin und dessen weitere Umsetzung mit Phosphortrichlorid und phosphoriger Säure herstellt und aus dieser dann ebenfalls die N-Benzylgruppen hydrogenolytisch abspaltet (vgl. Phosphorus and Sulfur 7, 333 (1979)).

Nach einem weiteren bekannten Verfahren wird Acetonitril mit Formaldehyd (Paraformaldehyd) mit phosphoriger Säure und Phosphortrichlorid umgesetzt und das erhaltene Reaktionsprodukt durch weitere Umsetzung mit Wasser in N-Acetylaminomethylphosphonsäure übergeführt, welche bei der anschließenden hydrolytischen Abspaltung der Acetylgruppe Aminomethylphosphonsäure liefert (vgl. DE-A1-2 829 046)).

Es ist auch bekannt, Aminomethylphosphonsäure herzustellen, indem man Benzylurethan durch Erhitzen mit Acetanhydrid und Paraformaldehyd in Essigsäure in N-Acetoxymethyl-benzylurethan überführt, dieses mit Triphenylphosphit zu N-(O,O-Diphenylphosphonomethyl)-benzylurethan umsetzt und aus diesem die Benzyloxycarbonylgruppen hydrolytisch abspaltet (vgl. Synthesis 1980, 906).

Mit den vorgenannten Verfahren ist es nicht möglich, Aminomethylphosphonsäure mit befriedigender Ausbeute in technischem Maßstab herzustellen. Mit keinem dieser Verfahren wird eine Gesamtausbeute von mehr als 70% der Theorie erreicht. In den meisten Fällen liegt die Gesamtausbeute im Bereich von 20—50% der Theorie. Ein Teil der vorgenannten Verfahren ist auch insofern nachteilig, als teure und schwer zugängliche Ausgangsmaterialien verwendet werden. Ferner müssen in einzelnen Fällen extreme Reaktionsbedingungen angewandt werden, die einen hohen apparativen Aufwand notwendig machen.

Der vorliegenden Erfindung liegt daher die Aufgabe zugrunde, ein Verfahren vorzuziehen, das ausgehend von leicht zugänglichen Ausgangsmaterialien die Herstellung von Aminomethylphosphonsäure auf einfache Weise und in befriedigender Ausbeute ermöglicht.

Es wurde gefunden, daß man Aminomethylphosphonsäure auf einfache Weise und in guter Ausbeute herstellen kann, wenn man einen Hexahydro-1,3,5-triazin-N,N',N''-tris-carbonsäureester der Formel II

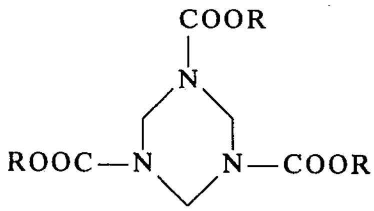

(II)

in welcher R eine Alkylgruppe mit 1 bis 4 Kohlenstoffatomen oder eine Phenylgruppe bedeutet, bei einer Temperatur von 90—150° C in Gegenwart einer Lewis-Säure als Katalysator mit einem Ester der phosphorigen Säure der Formel III

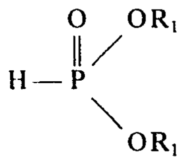

(III)

in welcher $R_1$ eine Alkylgruppe mit 1 bis 5 Kohlenstoffatomen, eine Phenylgruppe, eine Benzylgruppe, die 2-Cyanoäthyl- oder die 2,2,2-Trichloräthylgruppe bedeutet, zu einem N-Carboxy-aminomethyl-phosphonsäurederivat der Formel IV

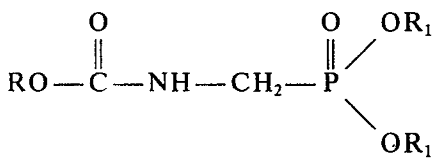

(IV)

in welcher R und $R_1$ die oben angegebene Bedeutung haben, umsetzt und dieses anschließend in wäßrigem Medium in Gegenwart einer starken Säure zu Aminomethylphosphonsäure hydrolysiert.

Die für das erfindungsgemäße Verfahren als Ausgangsmaterial benötigten Hexahydro-1,3,5-triazin-N,N',N''-tris-carbonsäureester der Formel II können auf einfache Weise durch Umsetzung entsprechender Urethane mit Formaldehyd in wäßrig-salzsauren Medium (vgl. J. Amer. Chem. Soc. 68, 1681 (1946)) oder durch Umsetzung des Urethans mit Paraformaldehyd in Gegenwart von p-Toluolsulfonsäure als Katalysator im Toluol als Lösungsmittel (vgl. J. Heterocycl. Chem. 11, 937 (1974)) in ausgezeichneter Ausbeute hergestellt werden. Von den so erhaltenen Hexahydro-1,3,5-triazin-N,N',N''-tris-carbonsäureestern der Formel II sind vor allem diejenigen als Ausgangsmaterialien für das erfindungsgemäße Verfahren geeignet, in denen R Methyl oder Äthyl bedeutet.

Als Lewis-Säuren, die die erfindungsgemäße Umsetzung von Hexahydro-1,3,5-triazin-N,N',N''-tris-carbonsäureestern der Formel II mit Estern der phosphorigen Säure der Formel III katalysieren kommen insbesondere Bortrifluorid-Ätherat, Titantetrachlorid, Zinntetrachlorid, Eisen(III)-chlorid und Aluminiumchlorid in Betracht. Als besonders geeigneter Katalysator hat sich Bortrifluorid-Ätherat erwiesen. Die Lewis-Säuren werden in der Regel in einer Menge von 1—10 Mol% bezogen auf Hexahydro-1,3,5-triazin-N,N',N''-tris-carbonsäureester der Formel II eingesetzt. Vorzugsweise setzt man die Lewis-Säuren in einer Menge von 4—6 Mol% bezogen auf Hexahydro-1,3,5-triazin-N,N',N''-tris-carbonsäureester der Formel II ein.

Die Umsetzung eines Hexahydro-1,3,5-triazin-N,N',N''-tris-carbonsäureesters der Formel II mit einem Ester der phosphorigen Säure der Formel III kann in Anwesenheit oder in Abwesenheit eines inerten Lösungsmittels durchgeführt werden. Geeignete Lösungsmittel sind beispielsweise Kohlenwasserstoffe und Halogenkohlenwasserstoffe mit einem Siedepunkt von wenigstens 110° C, wie Toluol, Xylol, Chlorbenzol und o-Dichlorbenzol.

Innerhalb des angegebenen Temperaturbereichs von 90—150° C, in dem die erfindungsgemäße Umsetzung eines Hexahydro-1,3,5-triazin-N,N',N''-tris-carbonsäureesters der Formel II mit einem Ester der phosphorigen Säure der Formel III durchgeführt werden kann, sind Temperaturen von 120—150° C bevorzugt.

Unter den Estern der phosphorigen Säure der Formel III sind solche bevorzugt, in denen $R_1$ eine Alkylgruppe mit 1—3 Kohlenstoffatomen bedeutet. Ebenfalls sehr geeignet ist der bis-(2-Cyanoäthyl)-ester und der bis-(2,2,2-Trichloräthyl)-ester der phosphorigen Säure, da die 2-Cyanoäthylgruppe und die 2,2,2-Trichloräthylgruppe besonders leicht hydrolytisch abspaltbare Gruppen darstellen.

Die Hexahydro-1,3,5-triazin-N,N'N''-tris-carbonsäureester der Formel II und die Ester der phosphorigen Säure der Formel III werden in der Regel in stöchiometrischer Menge zur Umsetzung gebracht. In der Praxis hat sich die Verwendung eines geringfügigen Überschusses an Ester der phosphorigen Säure der Formel III von bis zu 10 Mol% als vorteilhaft erwiesen.

Bei der Hydrolyse des durch Umsetzung eines Hexahydro-1,3,5-triazin-N,N',N''-tris-carbonsäureesters der Formel II mit einem Ester der phosphorigen Säure der Formel III erhaltenen N-Carbocy-aminomethylphosphonsäurederivats der Formel IV kann als wäßriges Reaktionsmedium entweder Wasser oder ein Gemisch von Wasser mit einem organischen Lösungsmittel, beispielsweise Gemische von Wasser mit Acetonitril, Methanol oder Äthanol dienen. Als starke Säuren können beispielsweise Salzsäure, Bromwasserstoffsäure, Jodwasserstoffsäure, Schwefelsäure, Phosphorsäure und p-Toluolsulfonsäure verwendet werden. Besonders geeignet sind Halogenwasserstoffsäure, insbesondere Salzsäure und Bromwasserstoffsäure. Die Hydrolyse des N-Carboxy-aminomethylphosphonsäurederivats der Formel IV wird bei erhöhter Temperatur, vorzugsweise bei Rückflußtemperatur des Reaktionsmediums durchgeführt.

Die Reste R und $R_1$ als Alkylgruppen können geradkettig oder verzweigt sein. Eine Phenylgruppe R oder $R_1$ kann unsubstituiert oder durch gegenüber den Reaktionsteilnehmern inerte Substituenten, wie Halogen, Niederalkyl, Alkoxy, Cyano und Nitro substituiert sein.

Das gleiche gilt für die Phenylgruppe der Benzylgruppe $R_1$.

Gemäß einer bevorzugten Ausführungsform des erfindungsgemäßen Verfahrens wird Aminomethylphosphonsäure hergestellt, indem man einen Hexahydro-1,3,5-triazin-N,N',N"-tris-carbonsäureester der Formel II, in welcher R Methyl oder Äthyl bedeutet in Gegenwart von 4—6 Mol% Bortrifluorid-Ätherat bezogen auf eingesetzten Hexahydro-1,3,5-triazin-N,N',N"-tris-carbonsäureester der Formel II bei einer Temperatur von 120—150°C mit einem Ester der phosphorigen Säure der Formel III, in welcher $R_1$ eine Alkylgruppe mit 1 bis 3 Kohlenstoffatomen, eine 2-Cyanoäthyl- oder eine 2,2,2-Trichloräthylgruppe bedeutet zu einem N-Carboxy-aminomethylphosphonsäurederivat der Formel IV, in welcher R Methyl oder Äthyl und $R_1$ eine Alkylgruppe mit 1 bis 3 Kohlenstoffatomen, 2-Cyanoäthyl oder 2,2,2-Trichloräthyl bedeutet, umsetzt und dieses anschließend in wäßrigem Medium in Gegenwart von Salzsäure oder Bromwasserstoffsäure bei Rückflußtemperatur des Reaktionsmediums zu Aminomethylphosphonsäure hydrolysiert.

Das erfindungsgemäße Verfahren zur Herstellung von Aminomethylphosphonsäure unterscheidet sich von den bisher bekannten Verfahren in vorteilhafter Weise dadurch, daß beide Reaktionsstufen, nämlich sowohl die Umsetzung eines Hexahydro-1,3,5-triazin-N,N',N"-tris-carbonsäureesters der Formel II mit einem Ester der phosphorigen Säure der Formel III als auch die die nachfolgende Hydrolyse des dabei gebildeten N-Carboxy-aminomethylphosphonsäurederivates der Formel IV, in nahezu quantitativer Ausbeute unter leicht einzuhaltenden Reaktionsbedingungen verlaufen. Da darüber hinaus auch die als Ausgangsmaterial benötigten Hexahydro-1,3,5-triazin-N,N',N"-tris-carbonsäureester der Formel II auf einfache Weise durch Umsetzung von entsprechenden Urethanen mit Formaldehyd in praktisch quantitativer Ausbeute zugänglich sind, ist das erfindungsgemäße Verfahren in besonderem Maße für eine wirtschaftliche Herstellung von Aminomethylphosphonsäure in technischem Maßstab geeignet.

Das erfindungsgemäße Verfahren wird durch die nachfolgenden Beispiele näher erläutert.

## Beispiel 1

### Herstellung von O,O-Diäthyl-N-äthoxycarbonyl-aminomethylphosphonat

In eine Mischung von 20,22 g (0,066 Mol) Hexahydro-1,3,5-triazin-N,N',N"-tris-carbonsäureäthylester und 28,4 ml (0,22 Mol) Diäthylphosphit werden bei 125°C Innentemperatur unter Rühren 2 ml Bortrifluorid-Ätherat eingetragen. Dann wird die Temperatur des Reaktionsgemisches auf 150°C erhöht. Nach einstündigem Rühren bei 150°C werden nochmals 2 ml Bortrifluorid-Ätherat eingetragen, wobei die Temperatur im Reaktionsgemisch vorübergehend auf 105°C abfällt und anschließend wieder langsam auf 150°C ansteigt. Danach wird das Reaktionsgemisch nochmals 1 Stunde bei 150°C gerührt. Anschließend werden die leichtflüchtigen Anteile im Hochvakuum abdestilliert, und man erhält als Rückstand 48,0 g (100% der Theorie) O,O-Diäthyl-N-äthoxycarbonyl-aminomethylphosphonat. Das Produkt kann ohne weitere Reinigung direkt für die nachfolgende Hydrolyse verwendet werden. Es hat einen Siedepunkt von 130°C (0,15 Torr) 0,2 mbar.

## Beispiel 2

### Herstellung von Aminomethylphosphonsäure

23,9 g (0,1 Mol) O,O-Diäthyl-N-äthoxycarbonyl-aminomethylphosphonat (Rohprodukt von Beispiel 1) werden 100 ml 20%ige Salzsäure eingetragen und 20 Stunden auf Rückflußtemperatur erhitzt. Danach wird die Salzsäure im Vakuum abgedampft. Man erhält als Rückstand 12,6 g fast reine Aminomethylphosphonsäure. Bei der Umkristallisation des Rückstandes aus Wasser/Aceton werden 9,4 g (84,7% der Theorie) reine Aminomethylphosphonsäure vom Schmelzpunkt 277—281°C erhalten.

Beispiel 3

Wie in Beispiel 1 wurden unter Verwendung von Bortrifluorid-Ätherat als Katalysator folgende Produkte hergestellt:

- O,O-Diäthyl-N-methoxycarbonyl-aminomethylphosphonat, Siedepunkt 130°C (0,08 Torr) 0,11 mbar, durch Umsetzung von Hexahydro-1,3,5-triazin-N,N',N''-tris-carbonsäuremethylester und Diäthylphosphit;
- O,O-Dimethyl-N-methoxycarbonyl-aminomethylphosphonat, Siedepunkt 125°C (0,08 Torr) 0,11 mbar, durch Umsetzung von Hexahydro-1,3,5-triazin-N,N',N''-tris-carbonsäuremethylester mit Dimethylphosphit;
- O,O-Dimethyl-N-äthoxycarbonyl-aminomethylphosphonat, Siedepunkt 130°C (0,1 Torr) 0,13 mbar, durch Umsetzung von Hexahydro-1,3,5-triazin-N,N',N''-tris-carbonsäureäthylester und Dimethylphosphit

Durch Verseifung dieser Produkte mit wäßriger Salzsäure bzw. wäßriger Bromwasserstoffsäure wird Aminomethylphosphonsäure in einer Ausbeute von 85—90% der Theorie erhalten.

**Patentansprüche**

1. Verfahren zur Herstellung von Aminomethylphosphonsäure der Formel I

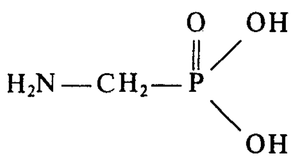

(I)

dadurch gekennzeichnet, daß man einen Hexahydro-1,3,5-triazin-N,N',N''-tris-carbonsäureester der Formel II

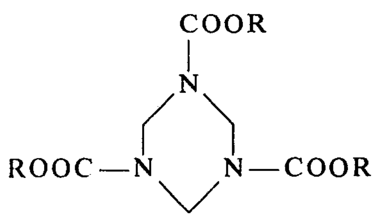

(II)

in welcher R eine Alkylgruppe mit 1 bis 4 Kohlenstoffatomen oder eine Phenylgruppe bedeutet, bei einer Temperatur von 90—150°C in Gegenwart einer Lewis-Säure als Katalysator mit einem Ester der phosphorigen Säure der Formel III

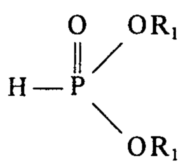

(III)

in welcher $R_1$ eine Alkylgruppe mit 1 bis 5 Kohlenstoffatomen, eine Phenylgruppe, eine Benzylgruppe, die 2-Cyanoäthyl- oder die 2,2,2-Trichloräthylgruppe bedeutet, zu einem N-Carboxy-aminomethylphosphonsäurederivat der Formel IV

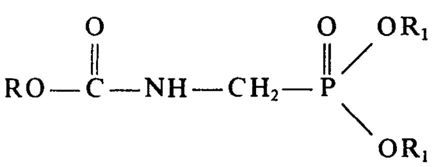

(IV)

in welcher R und $R_1$ die oben angegebene Bedeutung haben, umsetzt und dieses anschließend in wäßrigem Medium in Gegenwart einer starken Säure zu Aminomethylphosphonsäure hydrolysiert.

2. Verfahren nach Anspruch 1, dadurch gekennzeichnet, daß man als Lewis-Säure Bortrifluorid-Ätherat, Titantetrachlorid, Zinntetrachlorid, Eisen(III)chlorid oder Aluminiumchlorid verwendet.

3. Verfahren nach Anspruch 1, dadurch gekennzeichnet, daß man als Lewis-Säure Bortrifluorid-Ätherat verwendet.

4. Verfahren nach Anspruch 1, dadurch gekennzeichnet, daß man die Lewis-Säure in einer Menge von 1—10 Mol% bezogen auf Hexahydro-1,3,5-triazin-N,N',N''-tris-carbonsäureester der Formel II einsetzt.

5. Verfahren nach Anspruch 1, dadurch gekennzeichnet, daß man die Lewis-Säure in einer Menge von 4—6 Mol% bezogen auf Hexahydro-1,3,5-triazin-N,N',N''-tris-carbonsäureester der Formel II einsetzt.

6. Verfahren nach Anspruch 1, dadurch gekennzeichnet, daß man die Umsetzung eines Hexahydro-1,3,5-triazin-N,N',N''-tris-carbonsäureesters der Formel II mit einem Ester der phosphorigen Säure der Formel III bei einer Temperatur von 120—150° C durchführt.

7. Verfahren nach Anspruch 1, dadurch gekennzeichnet, daß man als Ausgangsmaterial ein Hexahydro-1,3,5-triazin-N,N',N''-tris-carbonsäureester der Formel II verwendet, in welcher R Methyl oder Äthyl bedeutet.

8. Verfahren nach Anspruch 1, dadurch gekennzeichnet, daß man als Ausgangsmaterial einen Ester der phosphorigen Säure der Formel III verwendet, in welcher $R_1$ eine Alkylgruppe mit 1 bis 3 Kohlenstoffatomen, die 2-Cyanoäthyl- oder 2,2,2-Trichloräthylgruppe bedeutet.

9. Verfahren nach Anspruch 1, dadurch gekennzeichnet, daß man den Ester der phosphorigen Säure der Formel III in einem Überschuß von 3—10 Mol% verwendet.

10. Verfahren nach Anspruch 1, dadurch gekennzeichnet, daß man als starke Säuren, in deren Gegenwart die Hydrolyse eines N-Carboxy-aminomethylphosphonsäurederivats der Formel IV durchgeführt wird, Salzsäure, Bromwasserstoffsäure, Jodwasserstoffsäure, Schwefelsäure, Phosphorsäure oder p-Toluolsulfonsäure verwendet.

11. Verfahren nach Anspruch 1, dadurch gekennzeichnet, daß man als starke Säure, in deren Gegenwart die Hydrolyse eines N-Carboxy-aminomethylphosphonsäurederivats der Formel IV durchgeführt wird, eine Halogenwasserstoffsäure verwendet.

12. Verfahren nach Anspruch 1, dadurch gekennzeichnet, daß man die Hydrolyse eines N-Carboxy-aminomethylphosphonsäurederivats der Formel IV in Wasser oder in einem Gemisch von Wasser mit Acetonitril, Methanol oder Äthanol bei Rückflußtemperatur des Reaktionsmediums durchführt.

13. Verfahren nach Anspruch 1, dadurch gekennzeichnet, daß man einen Hexahydro-1,3,5-triazin-N,N',N''-tris-carbonsäureester der Formel II, in welcher R Methyl oder Äthyl bedeuten in Gegenwart von 4—6 Mol% Bortrifluorid-Ätherat bezogen auf eingesetzten Hexahydro-1,3,5-triazin-N,N',N''-tris-carbonsäureester der Formel II bei einer Temperatur von 120—150° C mit einem Ester der phosphorigen Säure der Formel III, in welcher $R_1$ ein Alkylgruppe mit 1 bis 3 Kohlenstoffatomen, eine 2-Cyanoäthyl- oder 2,2,2-Trichloräthylgruppe bedeutet, zu einem N-Carboxy-aminomethylphosphonsäurederivat der Formel IV, in welcher R Methyl oder Äthyl und $R_1$ eine Alkylgruppe mit 1 bis 3 Kohlenstoffatomen, 2-Cyanoäthyl oder 2,2,2-Trichloräthyl bedeutet, umsetzt und dieses anschließend in wäßrigem Medium in Gegenwart von Salzsäure oder Bromwasserstoffsäure bei Rückflußtemperatur des Reaktionsmediums zu Aminomethylphosphonsäure hydrolysiert.

## Claims

1. A process for the preparation of aminomethylphosphonic acid of the formula I

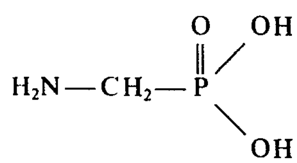

(I)

which process comprises reacting a hexahydro-1,3,5-triazine-N,N',N''-tris-carboxylic acid ester of the formula II

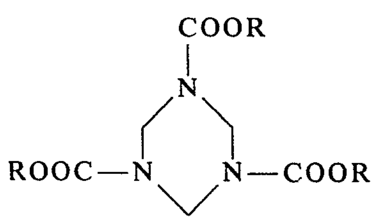

(II)

wherein R ist an alkyl group having 1 to 4 carbon atoms, or a phenyl group, at a temperature of 90—150°C in the presence of a Lewis acid as catalyst, with an ester of the phosphorous acid of the formula III

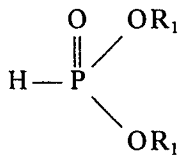

(III)

wherein $R_1$ is an alkyl group having 1 to 5 carbon atoms, a phenyl group, a benzyl group, the 2-cyanoethyl group or the 2,2,2-trichloroethyl group, to give an N-carboxyaminomethylphosphonic acid derivative of the formula IV

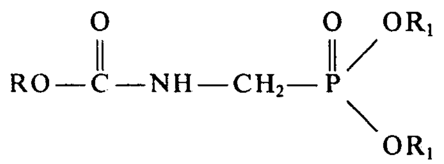

(IV)

wherein R and $R_1$ have the meanings defined above, and subsequently hydrolysing this derivative in an aqueous medium, in the presence of a strong acid.

2. A process according to claim 1, wherein the Lewis acid is boron trifluoride etherate, titanium tetrachloride, tin tetrachloride, iron(III) chloride or aluminium chloride.

3. A process according to claim 1, wherein the Lewis acid is boron trifluoride etherate.

4. A process according to claim 1, wherein the Lewis acid is used in an amount of 1—10 mol%, based on hexahydro-1,3,5-triazine-N,N',N''-tris-carboxylic acid ester of the formula II.

5. A process according to claim 1, wherein the Lewis acid is used in an amount of 4—6 mol%, based on hexahydro-1,3,5-triazine-N,N',N''-tris-carboxylic acid ester of the formula II.

6. A process according to claim 1, wherein the reaction of a hexahydro-1,3,5-triazine-N,N',N''-tris-carboxylic acid ester of the formula II with an ester of the phosphorous acid of the formula III is performed in the temperature range from 120—150° C.

7. A process according to claim 1, wherein the starting material is a hexahydro-1,3,5-triazine-N,N',N''-tris-carboxylic acid ester of the formula II, wherein R is methyl or ethyl.

8. A process according to claim 1, wherein the starting material is an ester of the phosphorous acid of the formula III, wherein $R_1$ is an alkyl group having 1 to 3 carbon atoms, the 2-cyanoethyl group or 2,2,2-trichloroethyl group.

9. A process according to claim 1, wherein the ester of the phosphorous acid of the formula III is used in an excess of 3—10 mol%.

10. A process according to claim 1, wherein hydrochloric acid, hydrobromic acid, hydriodic acid, sulfuric acid, phosphoric acid or p-toluenesulfonic acid is used as strong acid, in the presence of which the hydrolysis of an N-carboxy-aminomethylphosphonic acid derivative of the formula IV is performed.

11. A process according to claim 1, wherein a hydrohalic acid is used as strong acid, in the presence of which the hydrolysis of an N-carboxy-aminomethylphosphonic acid derivative of the formula IV is performed.

12. A process according to claim 1, wherein the hydrolysis of an N-carboxy-aminomethylphosphonic acid derivative of the formula IV is performed in water, or in a mixture of water and acetonitrile, methanol or ethanol, at the reflux temperature of the reaction medium.

13. A process according to claim 1, wherein a hexahydro-1,3,5-triazine-N,N',N''-tris-carboxylic acid ester of the formula II, wherein R is methyl or ethyl, is reacted in the presence of 4—6 mol% of boron trifluoride etherate, based on the hexahydro-1,3,5-triazine-N,N',N''-tris-carboxylic acid ester of the formula II employed, in the temperature range from 120—150° C, with an ester of the phosphorous acid of the formula III, wherein $R_1$ is an alkyl group having 1 to 3 carbon atoms, a 2-cyanoethyl group or 2,2,2-trichloroethyl group, to give an N-carboxy-aminomethylphosphonic acid derivative of the formula IV, wherein R is methyl or ethyl, and $R_1$ is an alkyl group having 1 to 3 carbon atoms, 2-cyanoethyl or 2,2,2-trichloroethyl; and subsequently hydrolysing this derivative in an aqueous medium, in the presence of hydrochloric acid or hydrobromic acid, at the reflux temperature of the reaction medium, to obtain aminomethylphosphonic acid.

**Revendications**

1. Procédé de préparation de l'acide aminométhylphosphonique de formule I

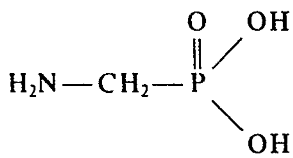

(I)

caractérisé en ce que l'on fait réagir un ester de l'acide hexahydro-1,3,5-triazine-N,N',N''-tris-carboxylique de formule II

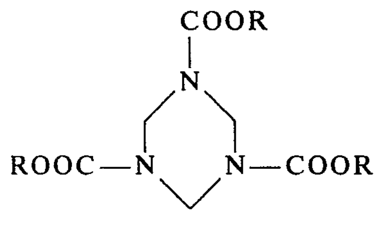

(II)

dans laquelle R représente un groupe alkyle en C 1—C 4 ou un groupe phényle, à une température de 90 à 150° C, en présence d'un acide de Lewis qui sert de catalyseur, avec un ester de l'acide phosphoreux de formule III

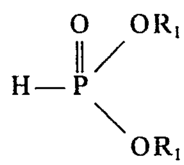

(III)

dans laquelle $R_1$ représente un groupe alkyle en C 1—C 5, phényle, benzyle, 2-cyanéthyle ou 2,2,2-trichloréthyle, ce qui donne un dérivé de l'acide N-carboxyaminométhylphosphonique de formule IV

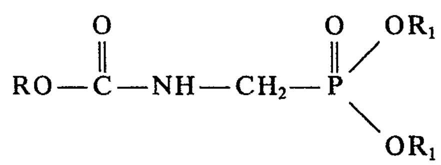

(IV)

dans laquelle R et $R_1$ ont les significations indiquées ci-dessus, qu'on hydrolyse ensuite en milieu aqueux en présence d'un acide fort, cette hydrolyse donnant l'acite aminométhylphosphonique recherché.

2. Procédé selon la revendication 1, caractérisé en ce que l'on utilise en tant qu'acide de Lewis l'éthérate du trifluorure de bore, le tétrachlorure de titane, le tétrachlorure d'étain, le chlorure ferrique ou le chlorure d'aluminium.

3. Procédé selon la revendication 1, caractérése en ce que l'on utilise en tant qu'acide de Lewis l'éthérate du trifluorure de bore.

4. Procédé selon la revendication 1, caractérisé en ce que l'on utilise l'acide de Lewis en quantités de 1 à 10 moles% par rapport à l'ester de l'acide hexahydro-1,3,5-triazine-N,N'N''-tris-carboxylique de formule II.

5. Procédé selon la revendication 1, caractérisé en ce que l'on utilise l'acide de Lewis en quantités de 4 à 6 moles% par rapport à l'ester de l'acide hexahydro-1,3,5-triazine-N,N',N''-tris-carboxylique de formule II.

6. Procédé selon la revendication 1, caractérisé en ce que la réaction entre un ester de l'acide hexahydro-1,3,5-triazine-N,N',N''-tris-carboxylique de formule II et un ester de l'acide phosphoreux de formule III est effectuée à une température de 120 à 150° C.

7. Procédé selon la revendication 1, caractérisé en ce que l'on utilise un ester de l'acide hexahydro-1,3,5-triazine-N,N',N''-tris-carboxylique de formule II dans laquelle R représente un groupe méthyle ou éthyle.

8. Procédé selon la revendication 1, caractérisé en ce que l'on utilise en tant que produit de départ un ester de l'acide phosphoreux de formule III dans laquelle $R_1$ représente un groupe alkyle en C 1—C 3, 2-cyanéthyle ou 2,2,2-trichloréthyle.

9. Procédé selon la revendication 1, caractérisé en ce que l'on utilise l'ester de l'acide phosphoreux de formule III en excès de 3 à 10 moles%.

10. Procédé selon la revendication 1, caractérisé en ce que l'on utilise en tant qu'acide fort en présence duquel on procède à l'hydrolyse d'un dérivé de l'acide N-carboxyaminométhylphosphonique de formule IV l'acide chlorhydrique, l'acide bromhydrique, l'acide iodhydrique, l'acide sulfurique, l'acide phosphorique ou l'acide p-toluène-sulfonique.

11. Procédé selon la revendication 1, caractérisé en ce que l'on utilise, en tant qu'acide fort en présence duquel on procède à l'hydrolyse d'un dérivé de l'acide N-carboxyaminométhylphosphonique de formule IV, un hydracide halogéné.

12. Procédé selon la revendication 1, caractérisé en ce que l'hydrolyse d'un dérivé de l'acide N-carboxyaminométhylphosphonique de formule IV est effectuée dans l'eau ou dans un mélange d'eau avec l'acétonitrile, le méthanol ou l'éthanol, à la température de reflux du milieu de réaction.

13. Procédé selon la revendication 1, caractérisé en ce que l'on fait réagir un ester de l'acide hexahydro-1,3,5-triazine-N,N',N''-tris-carboxylique de formule II dans laquelle R représente un groupe méthyle ou éthyle, en présence de 4 à 6 moles% d'éthérate du trifluorure de bore, par rapport à l'ester de l'acide hexahydro-1,3,5-triazine-N,N',N''-tris-carboxylique de formule II à une température de 120 à 150°C avec un ester de l'acide phosphoreux de formule III dans laquelle $R_1$ représente un groupe alkyle en C 1—C 3, 2-cyanéthyle ou 2,2,2-trichloréthyle, ce qui donne un dérivé de l'acide N-carboxyaminométhylphosphonique de formule IV dans laquelle R représente un groupe méthyle ou éthyle et $R_1$ un groupe alkyle en C 1—C 3, 2-cyanéthyle ou 2,2,2-trichloréthyle, qu'on hydrolyse ensuite en milieu aqueux en présence d'acide chlorhydrique ou bromhydrique à la température de reflux du milieu de réaction, cette hydrolyse donnant l'acide aminométhylphosphonique recherché.